Europäisches Patentamt

European Patent Office

Office européen des brevets

(11) Publication number: **0 212 784**
**A2**

# EUROPEAN PATENT APPLICATION

(21) Application number: **86303856.8**

(51) Int. Cl.⁴: **H04N 7/01**

(22) Date of filing: **21.05.86**

| | |
|---|---|
| The title of the invention has been amended (Guidelines for Examination in the EPO, A-III, 7.3).<br><br>(30) Priority: **01.07.85 US 750906**<br><br>(43) Date of publication of application:<br>**04.03.87 Bulletin 87/10**<br><br>(84) Designated Contracting States:<br>**AT BE CH DE FR GB IT LI LU NL SE** | (71) Applicant: **BELTRONICS, INC.**<br>**77 Pond Avenue**<br>**Brookline Massachusetts 02146(US)**<br><br>(72) Inventor: **Bishop, Robert**<br>**77 Pond Avenue**<br>**Brookline Massachusetts(US)**<br><br>(74) Representative: **Allsop, John Rowland**<br>**Rowland Allsop & Co. Black Boy Yard 15**<br>**High Street**<br>**West Wycombe High Wycombe, Bucks. HP14**<br>**3AE(GB)** |

(54) **Method and apparatus for converting images from scanning sensors, such as CCD's and the like.**

(57) Techniques and apparatus for scan conversion to accommodate for the incompatible CCD or similar scanning sensors and standard or independent television monitor different scan rates and signal handling techniques, that permits real-time direct viewing of the CCD output on conventional or other television-like displays with no apparent delay between CCD or similar scanned imaging and the display.

EP 0 212 784 A2

# FIG. I.

## METHOD OF AND APPARATUS FOR CONVERTING IMAGES FROM SCANNING SENSORS, SUCH AS CCD'S AND THE LIKE, FOR DIRECT REAL-TIME DISPLAY ON TELEVISION-LIKE MONITORS

The present invention relates to image scanning converters, being more particularly directed to the problems of displaying image signal information obtained from scanning optical sensors, such as CCD's and the like, as in the visible or invisible or infra-red regions, as well as other scanning radiation sensors, upon standard television-like display monitor apparatus which invariably operate with entirely different scan rates and synchronizing signal information than the scanning sensors.

While image-sensing scanning devices such as CCD cameras and the like can have their output signal information displayed on television-like monitors, such must be particularly adapted or modified for receiving stored signals of the scanner, or the operation requires transfer from memory to computers with display at relatively slow transfer and display rates. There are occasions, however, when it is extremely desirable to be able to display the signals currently being generated by devices such as CCD image scanners continually and in real-time instantaneous display on standard television monitor systems operating with standard scan and synchronizing signals which, of course, are not compatible with the corresponding scan rates and other signal processing and transfer techniques of CCD cameras. It is to the solution of this problem that the present invention is primarily directed.

It is accordingly an object of the invention to provide a new and improved image converter method and apparatus, particularly useful in enabling optical scanning sensors, such as CCD's and the like, operating at their own scan rates and with their own particular type of memory storage and transfer operation, to be adapted for facile display on normally incompatible standard television monitor display systems and the like.

A further object is to provide a novel technique for such scan conversion that is of more general utility as well.

In summary, from one of its features, the invention embraces a method of converting an image from an optical scanning sensor, such as a CCD, operating at a first scan rate, for display upon a television-like monitor independently operating at a different scan display rate, that comprises, operating the monitor display scan at the said different scan rate; storing in memory digitally converted image signals scanned by the sensor with continually periodic up-date; periodically reading out the stored digital image signals by clocking the signal transfer from storing in accordance with the television monitor scan rate; formatting, including enlarging if required, the stored digital image scan signals transferred from the memory to render the same compatible with the television monitor elemental display requirements; and converting the formatted signals to analog form and applying the same to the television monitor display to provide continual substantially real-time instantaneous display of the latest stored image scan signals on corresponding portions of the monitor display with up-dating from the up-dated storing. Preferred and best mode embodiments and design details are later presented.

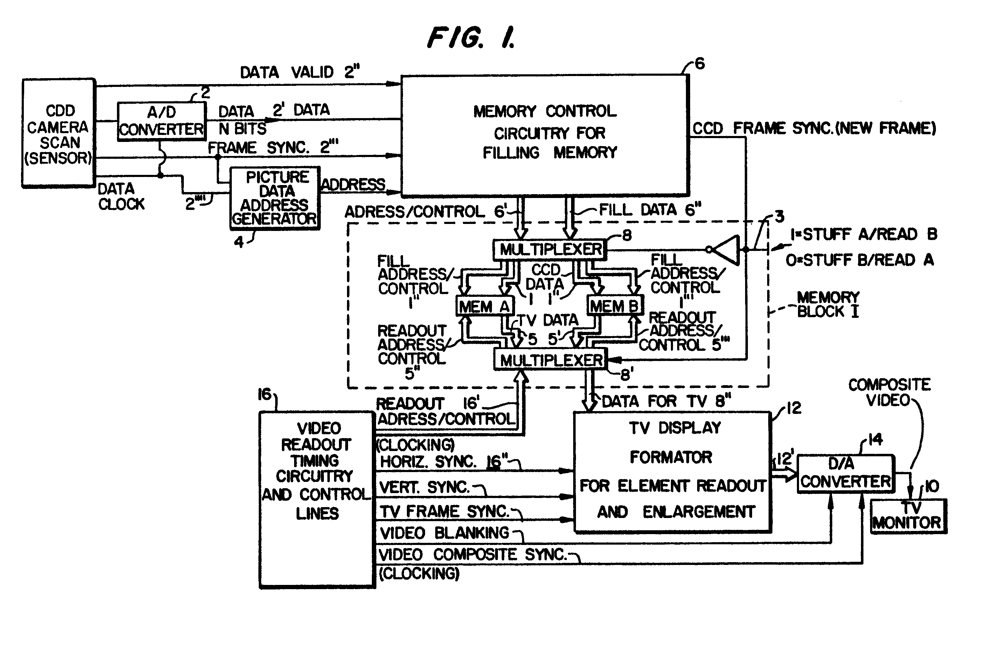

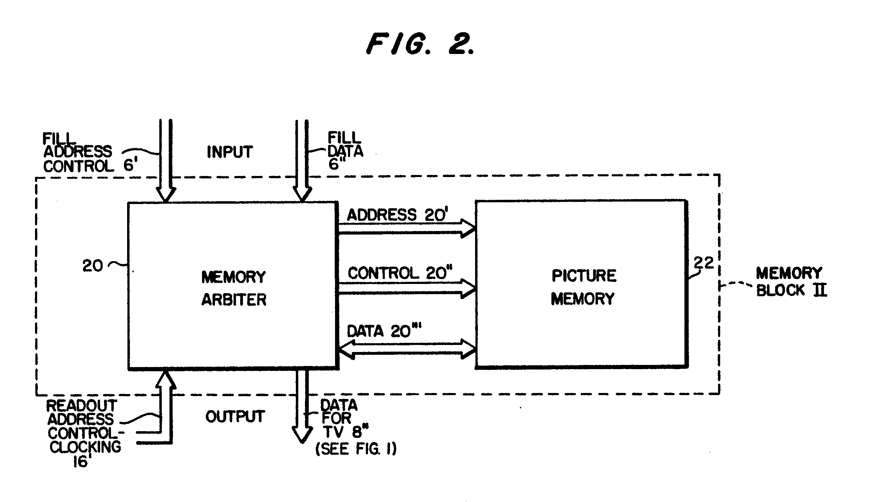

The invention will now be described in connection with the accompanying drawings, Fig. 1 of which is a combined block and circuit diagram illustrating the invention in preferred form for carrying out the scan conversion method underlying the same; and

Fig. 2 is a similar view of a modification.

In Fig. 1, a CCD camera, so-labelled, feeds an analog to digital converter 2 which provides digital data on line 2' representing the sensed and scanned image or picture information from the camera. The CCD output also includes a data valid line 2" which indicates when the data is real, a "frame sync" line 2'", which indicates the beginning of each new picture, and a data clock line 2"" which indicates when each new data element appears in the output of the CCD camera. The frame sync and data clock signals are fed as input to a conventional picture address generator 4 which provides addresses for each of the data elements. All these signals enter into memory control circuitry 6 of well-known form, later discussed, to store information into the memories employed in accordance with the invention. The output of the memory control circuitry 6 is applied to a block labelled "Memory Block I", containing a multiplexer switch 8 and two memories, MEM A and MEM B, both cooperating with an output multiplexer 8'.

The general operation is as follows. Consider scanned image signals from the CCD sensor first filling memory MEM A. The moment that image has filled MEM A, MEM A is switched or connected to the television or similar display system 10 for immediate display. The new CCD image signals are fed into memory MEM B. When the CCD image signals fill up memory MEM B, at the moment of fill, MEM B is switched or connected to the display 10 and MEM A is switched to receive the next CCD image. Thus, MEM A and MEM B alternate back and forth as the input multiplexer 8 connects the image data from the CCD, called "fill data", successively to MEM A and MEM B; and the output multiplexer 8' connects either MEM A or MEM B to the display formator 12, later discussed, for up-dating display on the eventual television monitor 10.

To effect this, the control circuit 6 for filling memory is shown having address/control and fill data lines 6' and 6" applied to the multiplexer 8, the outputs of which feed the .MEM A and MEM B in alternation with CCD data (lines 1 and 1') under fill address control (lines 1" and 1"') as the multiplexer is switched at 3 by "1" or "0" commands: "Stuff A/Read B" and "Stuff B/Read A" each new CCD frame. The application of MEM A and MEM B data for the television display is applied to the output multiplexer 8' by lines 5 and 5', respectively, with readout address control from the multiplexer applied at 5" and 5"', again controlled at 3 alternatively to read out successive CCD frames.

The necessary signals to read out these memories are generated by the video readout timing circuitry 16, which produces both the readout address and control of output multiplexer 8' at 16', well-known standard television and other timing signals 16", such as horizontal sync", "vertical sync", t.v. frame sync", "video blanking", and "video composite sync" on the lines so-labelled.

As the data is read out from the memory block (MEM A or MEM B), it enters at 8" the before-mentioned "T.V. display formator" 12 for element read-out and enlargement, effectively formatting the data and, if required, enlarging it to fit the needs of the television display. Sometimes, if the picture has to be centered, for example, the formator 12 may provide the necessary off-set timing in both the horizontal and vertical directions to center the image. Also, in some applications, it may, when the actual CCD image is very small, enlarge each data element such that each individual CCD signal element is represented by a larger rectangular square on the television screen. When this is done, generation of these individual squares is also performed by the television display formator 12.

The final image signals then enter a D/A converter 14 at 12' under control of the video blanking and video composite sync signals, as well as the read-out clocking signal, and a composite video signal is generated as the final output at 14 for application to the television display monitor 10.

Another variation is implemented in Fig. 2 wherein the "Memory Block I" of Fig. 1 is replaced by a "Memory Block II" containing a "Memory Arbiter" 20 and a "Picture Memory" 22, structured to guarantee access to any location with at least twice the rate of either the input rate or the output rate. The input fill address control and fill data lines 6' and 6" of Fig. 1 are shown applied to the memory arbiter 20 which addresses and controls the CCD image storage and retrieval from the picture memory 22 via respective address lines 20', control lines 20" and two-way data lines 20'". Thus, if both the input and output circuits request memory access simultaneously, the memory block II, through the arbiter 20, can respond to one request and then the other request prior to either port making a second request. This operation simulates the function of the two memories MEM A and MEM B of Fig. 1 that periodically operate back and forth. The result here, however, is that the television display is continually updated as the CCD data is produced.

The differences, therefore, between the systems of Figs. 1 and 2 are the following. In the embodiment of Fig. 1, there are two alternately filled and read memories, MEM A and MEM B, contained within the memory block I, and each time a CCD frame is completed and stored in one of the memories, this memory is connected into the output and is used to feed the television display. Thus, the television display is updated each CCD frame. In the system of Fig. 2, on the other hand, using the memory block II without separate input and output ports, each individual display point is updated each time that CCD image point is updated. Thus, for example, as the CCD scans, each time element number 4, for example, is scanned out of the CCD, it updates in the picture memory 22 element number 4, rather than waiting till all the CCD is completely read out.

As an example, the CCD may be running at twice the television scan rate. Conventional television displays have a new frame each 1/30 of a second, and each horizontal line is read out in 63.5 microseconds. Consider, now, a CCD running at twice that frame rate or 1/60 of a second per frame. In this application, the television set would begin to display an image, and halfway through that image, the CCD frame will have completed stuffing memory. In the system of Fig. 1, at the end of that 1/60 of a second, the completed or fully stuffed memory (MEM A or MEM B) would now be connected to the output and, therefore, during the second half of the television display, would actually be reading information from the second CCD frame. Thus, on the viewed screen or monitor, the upper half would be in formation from the first CCD frame and the lower half would be information from the second CCD frame. A feature of the system of Fig. 1 also resides in the fact that input and output rates can be totally asynchronous.

If we consider the CCD still running at twice the television rate and use the two input port memories of memory block II of Fig. 2, one would see the following. The television would begin reading out, and as it is displaying information, the information from the new CCD scan will be continually updating each point. Thus, when memory block II is used, each television element is continually updated a number of times as the television is continually reading out and displaying a frame.

In both the cases of Figs. 1 and 2, however, scan conversion is effected that accommodates for the incompatible CCD and standard independent television monitor scan rates and signal handling techniques and permits real-time direct viewing of the CCD output on conventional (or other) television-like displays with no apparent delay between CCD or similar scanned imaging and the display.

In successfully operated scan converters as above-described, the following chip circuitry was and can be employed: multiplexers 8 and 8' of memory block I (Fig. 1), Fairchild type 74F251; MEM A and MEM B, Hitachi type HM 6167; A/D converter 2, MOD 1205 (Analog Devices); D/A converter 4, HDG 0805 (Analog Devices); memory control circuitry 6 composed of counters 74F163, flip flops 74F74, gates 74F02 (nor), 74F08 (and), 74F10 (nand) and latches type 74S174 (Toshiba); TV display formator 12 composed of counters type 74163, decoders 74S138 and timing oscillator 14.318 MHz of Valpy-Fisher; and video readout timing circuit 16 embodying video sync chip type MM532 of National Semi-Conductor. In the system of Fig. 2, the memory arbiter circuitry 20 may comprise PROM type 74S472; multiplexer 74F257, decoders 74F138 and latches 74F374; and the picture memory 22 may be of the Toshiba type TC5564 P-10. Clearly equivalent and similar circuit configurations may also be used to perform similar functions of these components. The enlargement in the formator, if required·for element display requirements on the television monitor, for example, is readily effectable by repeating each element several times on the display.

Further modifications will occur to those skilled in this art, such being considered to fall within the spirit and scope of the invention as defined in the appended claims.

## Claims

1. A method of converting an image from an optical scanning sensor, such as a CCD, operating at a first scan rate, for display upon a television-like monitor independently operating at a different scan display rate, that comprises, operating the monitor display scan at the said different scan rate; storing in memory digitally converted image signals scanned by the sensor with continual periodic update; periodically reading out the stored digital image signals by clocking the signal transfer from storing in accordance with the television monitor scan rate; formatting, including enlarging if required, the stored digital image scan signals transferred from the memory to render the same compatible with the television monitor elemental display requirements; and converting the formatted signals to analog form and applying the same to the television monitor display to provide continual substantially real-time instantaneous display of the latest stored image scan signals on corresponding portions of the monitor display with up-dating from the up-dated storing.

2. A method as claimed in claim 1 and in which said storing is effected in a pair of memories by storing in one memory while reading out from the other and then switching to store in the said other memory while reading out from the said one memory.

3. A method as claimed in claim 2 and in which the periodic reading out is effected by switching the memory engaged in storing to reading out at the time of completion of a frame or predetermined portion thereof of the sensor scan, with the other memory thereupon switched to storing.

4. A method as claimed in claim 1 and in which said storing is effected on a continual basis with said clocking enabling continual read out for displaying on the monitor with each signal element continually updated in storing, so that during the television monitor display each element is updated a number of times.

5. A method of converting an image from an optical scanning sensor, such as a CCD, operating at a first scan rate, for display upon a television-like monitor independently operating at a different scan display rate, that comprises, periodically storing successive image scans at said first rate from the optical sensor; opera ting the monitor display scan at its said different scan rate; during said monitor display scan, periodically switching to the monitor the stored optical sensor image signals upon the completion of the storing of each successive image scan; clocking the signal transfer from storing upon said switching in accordance with the television monitor scan rate; and formatting, including enlarging if required, the stored image scan signals transferred to the monitor to render the same compatible with the television monitor elemental display requirements; the continual substantially real-time instantaneous display of the latest stored image scan signals being thereby effected on the corresponding portions of the monitor display scan.

6. Apparatus for converting an image from an optical scanning sensor, such as a CCD, operating at a first scan rate, for display upon a television-like monitor independently operating at a different scan display rate, said apparatus having, in combination with said sensor and monitor, means for operating the monitor display scan at the said different scan rate; memory means for storing digitally converted image signals scanned by the sensor with continual periodic up-date; means for periodically reading out the stored digital image signals by clocking signal transfer from said memory means in accordance with the television monitor scan rate; formatting means, including means for enlarging if required, the stored digital image scan signals transferred from the memory means to render the same compatible with the television monitor elemental display requirements; and means for converting the formatted digital signals to analog form and for applying the same to the television monitor display to provide continual substantially real-time instantaneous display of the latest stored image scan signals on corresponding portions of the monitor display with up-dating from the up-dated storing.

7. Apparatus as claimed in claim 6 and in which said memory means comprises a pair of memories, and switching means is provided for controlling the filling and reading out of the memory means by storing in one memory while reading out from the other, and then switching to store in the said other memory while reading out from the said one memory.

8. Apparatus as claimed in claim 7 and in which said pair of memories are inputted and outputted by multiplexer means operated by control means synchronized with the frame synchronization of said sensor. .

9. Apparatus as claimed in claim 8 and in which said clocking and monitor scan display is controlled by video recorder timing and control means connected to control the output multiplexer means and to supply monitor synchronizing signals to said formatting means, the digital-to-analog converting means being connected between said formatting means and said monitor and being controlled by video synchronizing signals from said video readout timing and control means.

10. Apparatus as claimed in claim 6 and in which said means for periodic reading out comprises means for switching the memory engaged in storing to reading out at the time of completion of a frame or predetermined portion there of of the sensor scan, with the other memory thereupon being switched to storing.

11. Apparatus as claimed in claim 6 and in which said memory means effects storing on a continual basis, with said clocking enabling continual read out for displaying on the monitor with each signal element continually updated for storing, so that during the television monitor display each element is updated a number of times.

12. Apparatus as claimed in claim 11 and in which said memory means comprise a picture memory controlled for digital image signal up-date and readout by memory arbiter means.

13. Apparatus as claimed in claim 12 and in which said clocking and monitor scan display is controlled by video readout timing and control means connected to control the memory arbiter means and to supply monitor synchronizing signals to said formatting means, the digital-to-analog converting means being connected between said formatting means and said monitor and being controlled by video synchronizing signals from said video readout timing and control means.

14. A method as claimed in claim 1 and in which the said periodically reading out is effected during successive frames of the display, and said continual periodic up-date is effected before the next following display frame.--

15. Apparatus as claimed in claim 6 and in which the said means for periodically reading out effects such read out during successive frames of the display, and said memory means effects said continual periodic up-date before the next following display frame.

FIG. 1.

# FIG. 2.

FILL ADDRESS CONTROL 6'

INPUT

FILL DATA 6"

ADDRESS 20'

20

MEMORY ARBITER

CONTROL 20"

DATA 20'"

PICTURE MEMORY

22

MEMORY BLOCK II

READOUT ADDRESS CONTROL-CLOCKING 16'

OUTPUT

DATA FOR TV 8" (SEE FIG. I)

0 212 784